# EUROPEAN PATENT SPECIFICATION

(11) **EP 4 248 087 B1**
(45) Date of publication and mention of the grant of the patent: **16.07.2025**
(21) Application number: 20864263.7
(22) Date of filing: 23.11.2020
(51) Int. Cl.: F03D 3/00, F03D 9/17, F03D 9/25, F03D 9/28

(54) **SYSTEM FOR ACCELERATING WIND TURBINE ROTATION**
SYSTEM ZUR BESCHLEUNIGUNG EINER WINDTURBINENDREHUNG
SYSTÈME D'ACCÉLÉRATION DE LA ROTATION D'UNE ÉOLIENNE

(43) Date of publication of application: 27.09.2023
(73) Proprietor: Piskorz, Waldemar, 21-509 Koden (PL); Piskorz, Tomasz Tadeusz, 21-509 Koden (PL); Piskorz, Ireneusz, 21-509 Koden (PL); Piskorz, Krzysztof, 21-509 Koden (PL)
(72) Inventor: Piskorz, Waldemar, 21-509 Koden (PL); Piskorz, Tomasz Tadeusz, 21-509 Koden (PL); Piskorz, Ireneusz, 21-509 Koden (PL); Piskorz, Krzysztof, 21-509 Koden (PL)
(74) Representative: Belz, Anna
(86) International application number: PCT/IB2020/061052
(87) International publication number: WO 2022/106877

(56) References cited:
- EP-B1- 2 802 770
- WO-A1-2017/006658

## Description

The invention relates to a system for accelerating rotation of a wind turbine with a rotor having vertical rotation axis.

From application PL422292 there is known a wind power plant comprising a turbine with vertical rotation axis and a generator. The rotor on its upper conical part is equipped with a lid functioning as an air tank.

Another document representing the prior art is WO2017/006658.

The system according to the invention is characterised in that on the upper end of an elongated shaft there is an irreversible transmission connected with a gearmotor having an electric motor connected by a unidirectional clutch with a pneumatic motor which, in turn, is coupled with a magnetic motor. Aforementioned motors together with a mechanism for connecting the generator are connected with a controller which controls the connection of the motors to the shaft, disconnection of the generator, and the operation of the motors. Moreover, the pneumatic motor is connected with a compressed air tank filled by a compressed air installation connected with the turbine generator.

The system is used in cases when the wind is temporarily too low to provide force sufficient for a nominal rotation speed. The turbine might be accelerated by using one of the three motors, whereby the pneumatic motor is connected or disconnected depending on the filling level of the compressed air tank. All engines can work simultaneously or each of them individually. The turbine, when accelerated, returns energy input with a surplus, which constitutes major advantage of such a solution. The system according to the invention increases the potential of the wind turbine because the system allows energy to be stored.

Additionaly the system by using several different types of engines simultaneously allows for continuous operation of the turbine.

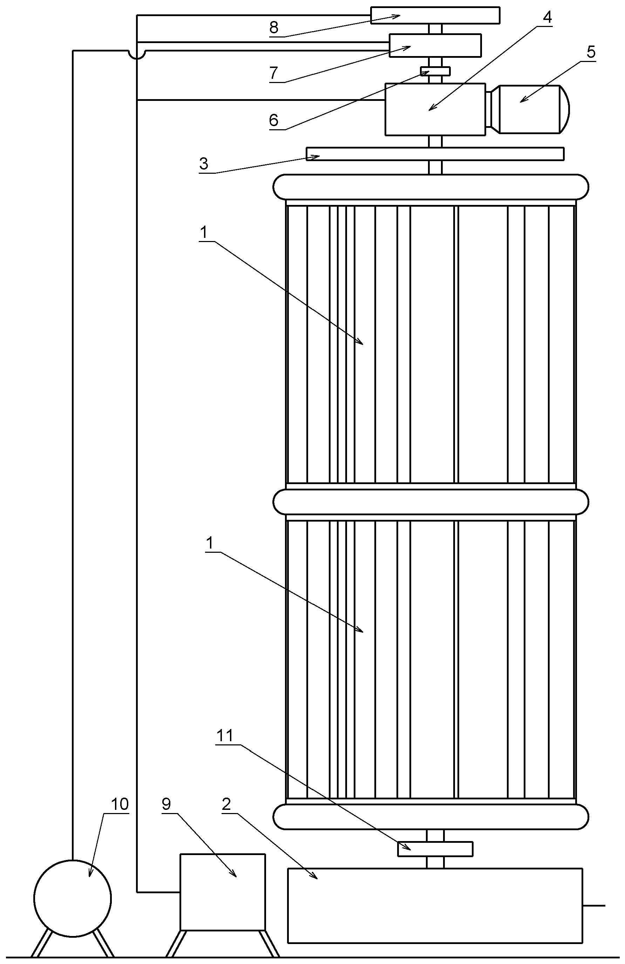

The solution according to the invention is shown in its exemplary embodiment on the drawing presenting the general view of the system. The application covers any configuration of motors on the shaft, including single motors.

The wind turbine comprises two segments 1 with rotors having vertical rotation axis. The turbine is equipped with a slow-speed generator 2 with an inverter.

On the elongated shaft of the upper rotor there is an irreversible transmission 3 installed connected with a gearmotor 4 coupled with an electric motor 5. The gearmotor is connected by a unidirectional clutch 6 with a pneumatic motor 7 mounted also on the rotor shaft. Above the pneumatic motor 7 there is magnetic motor 8. Next to the generator 2 there is a controller 9 with which the motors 5, 7, and 8 and a mechanism 11 are connected. Additionally, the pneumatic motor 7 is connected with a compressed air tank 10.

The system works as follows: In low wind conditions rotation speed of the turbine is accelerated to about 50 revolutions per minute, whereby the generator 2 reaches its nominal power. At this moment the generator is disconnected from the rotator shaft using the mechanism 11. After the turbine rotation is accelerated, one of the motors 5, 7, and 8, which has been so far driving the turbine, is switched of, and the mechanism 11 connects the generator 2. The turbine rotates by its torque thus becoming a propeller, returning the energy input with a surplus depending also on the wind force. In case of a further lack of wind with an appropriate force revolution speed of the turbine decreases, generator 2 is disconnected, and the segments of the turbine are again accelerated to the nominal revolution speed.

The pneumatic motor and the magnetic motor can drive the turbine in continuous mode of operation.

## Claims

1. A system for accelerating rotation of a wind turbine with rotors having vertical rotation axis comprising an electrical generator, wherein the system further comprises the following features:
on the upper end of an elongated rotor shaft there is an irreversible transmission (3) installed with which there is connected a gearmotor (4) with an electric motor connected by a unidirectional clutch (6) with a pneumatic motor (7) which, in turn, is coupled with a magnetic motor (8), whereby the electric motor (5), the pneumatic motor (7) and the magnetic motor (8) are connected with a controller (9) to which there is also connected a mechanism (11) for connecting and disconnecting the generator (2).

2. The system according to claim 1, **characterized in that** the pneumatic motor (7) is connected with a compressed air tank (10) which is filled by a compressed air installation connected with the generator (2) of the turbine.

## Patentansprüche

1. System zur Beschleunigung einer Windturbine mit Rotoren mit vertikaler Drehachse, die einen Stromgenerator hat, und ein am oberen Ende der verlängerten Rotorwelle installiertes Einweggetriebe (3), an das ein Getriebemotor (4) mit einem Elektromotor (5) angeschlossen ist, und der über eine Einwegkupplung (6) mit einem Pneumatikmotor (7) verbunden ist, der wiederum mit einem Magnetmotor (8) gekoppelt ist, wobei der Elektromotor (5), der Pneumatikmotor (7) und der Magnetmotor (8) mit einem Steuergerät (9) verbunden sind, an das auch der Mechanismus (11) zum Anschluss des Generators (2) angeschlossen ist, aufweist.

2. Das System nach dem Anspruch 1, **dadurch gekennzeichnet, dass** der Pneumatikmotor (7) mit einem Druckluftbehälter (10) verbunden ist, der mittels einem mit dem Generator (2) der Turbine verbundenen Druckluftsystem gefüllt wird.

## Revendications

1. Un système d'accélération d'une éolienne à rotors à axe vertical, comportant un générateur de puissance et équipé:
d'un réducteur unidirectionnel (3) installé à l'extrémité supérieure de l'arbre allongé du rotor, auquel un motoréducteur (4) avec un moteur électrique (5) est relié par le biais d'un accouplement unidirectionnel (6) à un moteur pneumatique (7), lui-même relié à un moteur magnétique (8) ;
le moteur électrique (5), le moteur pneumatique (7) et le moteur magnétique (8) étant reliés à un contrôleur (9) auquel un mécanisme (11) pour la connexion du générateur (2) est également relié.

2. Système selon la revendication 1 **caractérisé en ce que** le moteur pneumatique (7) est relié à un réservoir (10) d'air comprimé, rempli par un système d'air comprimé relié au générateur (2) de l'éolienne.
